(19) Europäisches Patentamt
European Patent Office
Office européen des brevets

(11) Publication number: 0 139 931
A2

(12) EUROPEAN PATENT APPLICATION

(21) Application number: 84109433.7

(22) Date of filing: 08.08.84

(51) Int. Cl.⁴: C 08 K 3/00
C 08 K 3/24, C 08 F 6/02

(30) Priority: 08.08.83 US 521295

(43) Date of publication of application: 08.05.85 Bulletin 85/19

(84) Designated Contracting States: BE DE FR GB IT NL SE

(71) Applicant: THE DOW CHEMICAL COMPANY
Dow Center 2030 Abbott Road Post Office Box 1967
Midland Michigan 48640(US)

(72) Inventor: Christensen, Christopher P.
60 So. Shamrock Court
Lake Jackson Texas(US)

(72) Inventor: Henslee, Walter W.
58 So. Shamrock Court
Lake Jackson Texas(US)

(72) Inventor: Strother, Greene W., Jr.
Rt. 1 Box 1434
Brazoria Texas(US)

(72) Inventor: Hairston, Thomas J.
104 Rose Trail
Lake Jackson Texas(US)

(72) Inventor: Niswander, Ronnie H.
62 Hollyhock Court
Lake Jackson Texas(US)

(74) Representative: Casalonga, Axel et al,
BUREAU D.A. CASALONGA OFFICE JOSSE & PETIT
Baaderstrasse 12-14
D-8000 München 5(DE)

(54) **Process for neutralizing halogens and acids released in the processing of polymers.**

(57) There is described a process for for neutralizing halogen and/or acids released during processing of polymeric materials having thermally releasable acidic components and/or additives, which may release halogen and/or acids during processing to final products. The composition of matter is selected from a genus of multimetallic compounds having a hydroxyl content.

EP 0 139 931 A2

# PROCESS FOR NEUTRALIZING HALOGEN AND ACIDS RELEASED IN THE PROCESSING OF POLYMERS

## BACKGROUND OF THE INVENTION

In the processing of polymeric materials, certain components and additives such as catalysts, catalyst residues, fire retardants, processing agents, halogenated blowing agents like methylene chloride, are encountered which are acidic in nature having usually halogen functionality which is activated or released in subsequent processing of the resinous polymer. Such halogen and/or acids are corrosive to process equipment and may discolor the resin product.

In addition some polymers contain halogen and/or acid components substituted on the polymer carbon backbone or pendent chains which can undergo thermal release. For example, halogen atoms associated with the polymer structure, e.g. those in the backbone of polyvinyl chloride or chlorinated polyethylene, under certain conditions encountered in processing polymers are released and create corrosion problems as well as discoloration of the polymeric materials.

Therefore it would be advantageous to have available a material which could be added to the polymeric material to tie-up or scavenge such halogen or acidic components whenever produced. Furthermore, such agent should have little or no effect on polymer properties at levels sufficient to neutralize acidic components.

## DETAILED DESCRIPTION OF THE INVENTION

The compositions of the present invention scavenge the acids released during the thermal processing of the polymer to final product. The acid scavenging property of the compositions of the present invention can be employed at any point downstream of the final step in the polymerization process. For example the carrier, e.g. magnesium halide, employed in most Ziegler catalyst systems that polymerize ethylene, with or without comonomers such as butylene, octene and the like may release hydrogen halide during the numerous melt extrusion operations. Suitable acid scavengers employed herein are compositions of the general formula

$$A_w^a B_x^b (OH)_y C_z^c$$

A and B are each one or more metals having valences of a and b respectively; a has a value of 1 or 2; b has a value of 2 or 3, w, x and y are positive numbers or fractions in which y is >2, and the ratio of x/w ≧1; $z=0$ to $\frac{(aw+bx)-y}{c}$; C is one or more anions having a valence of c; and c has a value of 1, 2 or 3 such as, for example, $CO_3^=$, $HCO_3^-$, $PO_4^{-3}$, $HPO_4^=$, $H_2PO_4^-$, $SO_4^=$, $HSO_4^-$, $S^=$, $HS^-$, $SO_3^{-2}$, $S_2O_5^{-2}$, $S_2O_4^{-2}$, $S_2O_2^{-2}$, $S_2^{-2}$, $CN^-$, $C_2^{-2}$, $I_3^-$, $HPO_3^{-2}$, $H_2P_2O_5^{2-}$, $NH^{2-}$, $NH_2^-$, $NHOH^-$, $N_2H_3^-$, $NO_2^-$, $ClO_2^-$, $ClO^-$, $O^{-2}$, $F^-$, $Cl^-$, $Br^-$, $I^-$, $RCO_2^-$, and $R(COO)_2^{-2}$, wherein R represents alkyl or aryl moieties. These compositions

can be essentially pure compounds or mixtures of compounds which are generally formed under basic conditions and may contain certain amounts of impurities (e.g. $BO_x(OH)_{a-2x}$, $A(OH)_a$, $B(OH)_b$). Furthermore, these compositions may be modified by thermal treatment, i.e. heating above 200°C and preferably at 400°C to 1200°C. Their activity is usually reduced as the temperature is increased. Such treatment may be necessary to moderate the hydroxyl activity for certain applications, for example, as a stabilizer in vinylidene chloride polymers or copolymers.

Particularly, suitable compositions include the metal aluminates described in U.S. Patents 4,348,296; 4,348,297; 4,392,961; 4,392,979; 4,392,980; and 4,400,431.

Alternatively, a product resulting from the surface coating of the compositions with surface active agents to improve dispersibility, can be employed in the present invention. Suitable anionic surface active agents include, for example, alkali metal and alkaline earth metal salts of higher fatty acids of the formula RCOOM and $(RCOO)_2M$ in which R is an alkyl group having 3 to 40 carbon atoms and M represents an alkali or alkaline earth metal atom; alkylsulfates of the formula $ROSO_3M$ and $(ROSO_3)_2M$ in which R and M are as defined above; alkylsulfonates of the formula $RSO_3M$ and $(RSO_3)_2M$ in which R and M are as defined above; alkylarylsulfonates of the formula R-aryl-$SO_3M$ and (R-aryl-$SO_3)_2M$ in which R and M are as defined above and the aryl group represents phenyl, naphthyl, tolyl, etc.; and sulfosuccinic ester salts expressed by the formula

$$\begin{array}{l} ROCOCH_2 \\ \quad | \\ ROCOCHSO_3M \end{array} \quad \text{and} \quad \left[\begin{array}{l} ROCOCH_2 \\ \quad | \\ ROCOCHSO_3 \end{array}\right]_2 M$$

in which R and M are as defined above. Also suitable are certain phosphate salts of the general formulas $(ROPO_3)M$, $(ROPO_3)M_2$, $((RO)_2PO_2)M$, and $((RO)_2PO_2)_2M$, where R and M are as defined above. Organic acids may also be used as the surface coating agent. Thus, compounds corresponding to the formulas RCOOH, $ROSO_2OH$, $RSO_2OH$, $RPO(OH)_2$, and $(RO)_2POOH$ can be used in which R may be any alkyl and/or aryl group, as defined above, which produces a stable acid. Such acids often improve dispersibility of the inorganic composition.

Specific examples of anionic surfactants include calcium stearate, sodium stearate, potassium stearate, sodium oleate, magnesium oleate, potassium oleate, sodium palmitate, potassium palmitate, calcium laurate, sodium laurate, potassium laurate, sodium laurylbenzenesulfonate, potassium octadecylsulfate, sodium laurylsulfonate and disodium 2-sulfoethyl α-sulfostearate, calcium stearyl phosphate, disodium laural phosphate, and potassium distearyl phosphate. Specific examples of organic acid surfactants include stearic acid, palmitic acid, oleic acid, benzoic acid, ethyl hexanoic acid, and mixtures of these and other organic acids.

The compositions of the present invention may absorb up to 20 weight percent water depending on surface area, the particular metal composition and its pretreatment before use. Humidity conditions and the presence of surface active agents also contribute to

the amount of absorbed water. Thermal treatment of the composition will reduce the amount of absorbed water and above about 200°C will change the activity of the composition, usually reducing its activity, for example toward dehydrohalogenation of carbon bound halogen, as conversion to the oxide takes place.

In the present invention, resins containing halogens and/or acidic components include olefinic resins containing halogens derived from polymerization catalysts and/or post-halogenation. Thus, for example, homopolymers and copolymers of alpha-olefins, copolymers of at least one alpha-olefin and dienes, post-chlorinated products of these polymers and copolymers, and blends of these halogen-containing olefinic resins, for example polyethylene, polypropylene, poly-1-butene, poly-4-methyl-1-pentene, and ethylene propylene copolymer which are produced by using halogen-containing Ziegler-type catalysts, and post-chlorinated polyethylene are included.

Other examples of resins containing halogens and/or acidic components in this invention include thermoplastic resins produced by using catalysts containing halogens and/or acidic components such as boron trifluoride, tin tetrachloride, sulfuric acid or hydrochloric acid and containing halogen and/or acidic subcomponents derived from these catalysts, for example, styrene resins such as polystyrene, AS resin (acrylonitrile-styrene copolymer), ABS resin (acrylonitrile/butadiene/styrene copolymer), BS resin (butadiene/styrene copolymer), acrylic resins such as polyacrylates and methacrylic resins such as polymethacrylates; halogen-containing thermoplastic vinyl resins such as vinyl chloride polymer or copolymers such as vinyl chloride/vinyl

acetate resin, vinylidene polymer or copolymers, fluororethylene polymers or copolymer and polymer blends contaning vinyl chloride resins; chlorine or fluorine-containing rubbers such as chlorinated polyvinyl chloride, chloroprene and chlorinated isobutylene rubber and fluorinated rubber; and halogen-containning thermoplastic resins such as post-chlorinated vinyl chloride polymer or copolymers, polytetrafluoroethylene, fluorinated ethylene-propylene copolymer, polychloro-trifluoroethylene acetate-containing thermoplastic resins such as polyvinyl acetate or ethylenevinylacetate copolymer, and blends of these resins with each other or with other resins.

The compound may be conveniently injected into the polymer at the point where the polymer exits the reactor, usually together with antioxidants and/or other additives and/or other polymers if a blend of polymers is desired. However, the compound can be added at any place desired after the reactor system or the last of any reactor series or reaction zones when a plurality thereof is employed, i.e, at any point downstream of the reactors including a melt extruder, where good dispersion of the compound throughout the polymer can be accomplished.

In the practice of this invention, the composition is used in an amount of 0.01 to 5, preferably 0.01 to 2, more preferably 0.01 to 1.0, and especially preferably 0.05 to 1.0 part by weight per 100 parts by weight of polymer.

There is no restriction on the way in which the composition is mixed with the resin. The same methods of mixing as used conventionally in incorporating stabilizers or fillers into such resins may be utilized. For example, the mixing can be performed by using such devices as a ribbon blender, high-speed mixer, "Ko-kneader", pelletizer, mixing roll, extruder or intensive mixer.

For in-process applications, the composition is usually slurried, dispersed or milled in a suitable inert diluent which is compatible with the polymer. Also the suspendability of the composition in the inert diluent is improved when the particle size is very small, i.e., less than 20 microns (μm), especially less than five microns for maximum reactivity and use in film applications. In addition, suitable suspending agents may also be used in an amount that is less than 10% by weight relative to the composition.

The particle size of the composition should also be small enough as not to be detrimental to polymer properties. Especially important is film clarity which is affected by the perceivable particle size of the composition. Typically a particle size of less than 20 microns, especially less than five microns, depending upon the type of polymer and film thickness is acceptable.

Suitable methods to achieve particle or agglomerate size distribution less then twenty microns include conventional ball milling (wet or dry), vibratory milling, jet milling and similar methods, with or without milling aids. Wet vibratory milling or jet milling with size separation and recycle, are preferred when a very small particle size (i.e. less than five

microns) is desired, for example in polyethylene which is to be ultimately used to prepare films. Milling aids, as discussed below, are also helpful. Reactor conditions, post treatment and aging, or the use of flocculants can also affect crystallite agglomeration.

The compositions of the present invention may also be added to the polymer at any point downstream of the reactors , e.g. to separator or a melt extruder, where good dispersion of the compound throughout the polymer can be accomplished to improve the color (whiteness) and increased neutralization of acidic components.

Examples of additives conventionally found in the final polymer blends are antioxidants such as 2,6-di-t-butyl-p-cresol, 2,5,-di-t-butyl hydroquinone, 2,2'-methylenebis(4-methyl-6-t-butylphenol), 4,4'-thiobis-6-5-butylphenol), 4,4'-thiobis-(6-t-butyl-m-cresol), and octadecyl-3-(3',5'-di-t-butyl-4'-hydroxyphenyl) propionate; ultraviolet absorbers such as 2-hydroxy-4-octoxybenzophenone, 2-(2'-hydroxy-5-methylphenyl) benzotriazole and ethyl 2-cyano-3,3-diphenylacrylate; antistatic agents such as pentaerythritol monostearate, sorbitan monopalmitate, polyethylene oxide and carbowax; lubricants such as calcium stearate, zinc stearate, butyl stearate and ethylenebis stearamide; plasticizers such as dimethyl phthalate, diethyl phthalate, olefic acid esters, phosphoric acid esters, waxes, and liquid paraffin; coloring agents such as carbon black, phthalocyanine, quinacridone, indoline, azo pigments, titanium oxide and red iron oxide; and fillers such as asbestos, glass fibers, talc, mica, wallastonite, calcium silicate, aluminum silicate and calcium carbonate.

The amounts of these additives can be selected as desired. For example, the amounts based on the weight of the olefin resin are typically 0.01 to 1% for antioxidants, ultraviolet absorbers, and antistatic agents, 0.1 to 5% for coloring agents and lubricants; 0.1 to 10% for plasticizers; and 1 to 50% for fillers.

Other polymer forming processes which can advantageously employ the compositions of the present invention are those which employ halide containing catalysts which do not normally require deactivation but which release halogen atoms as a result of process conditions and/or lose small amounts of halogen from the backbone during processing. Such processes are those for producing vinyl halide resins, chlorinated polyethylene, and vinyl/vinylidene halide resins. The compounds of the present invention can be added following final reaction prior to pelletizing and/or powder formation as well as during melt extrusion to scavenge halide. In some instances compounds have been found to dehydrohalogenate or dehalogenate the backbone and it is necessary to employ the less active forms of the compounds such as those compounds formed by heating above 200°C and preferably at 400°C to 1200°C.

The following examples are illustrative of the present invention. Unless otherwise indicated, all parts and percentages are by weight.

Example 1 - Polyethylene

Polyethylene having a deactivated Ziegler catalyst residue was used as a base resin. Inorganic compositions (ground to less than 5 microns by wet grinding) corresponding to the invention were dry

blended, then extruded with the polyethylene. Analysis of the polymer revealed the actual level of inhibitor added. The corrosion test was run on a Husky T1385ph injection molder with a mold made of a polished mild steel plate. The 17.8 x 17.8 cm plate was exposed to hot polymer at 254°C (490°F) during cycles of 25 seconds. The data shown in the attached table represents the plate appearance after 22.7 kg (50 lbs.) of polymer had been injected. The ranking of 1-5 is from very good (no corrosion) to poor (significant corrosion). As can be seen from the data, the carbonate and bicarbonate containing compositions were very effective in reducing mold corrosion.

TABLE 1 - MOLD PLATE CORROSION TEST

| Corrosion Inhibitor | Level in polymer | Ranking |
|---|---|---|
| None | - - | 5 |
| $MgAl(OH)_{4.6}Cl_{0.4}$ | 550 ppm | 4 |
| $MgAl(OH)_{4.75}(HCO_3)_{0.25}$ | 550 ppm | 2 |
| $MgAl(OH)_{4.4}(CO_3)_{0.3}$ | 490 ppm | 1 |

Example 2 Polyvinylchloride

The use of the invention as heat stabilizers for polyvinylchloride (PVC) is shown in the following table. The examples were conducted as follows: A base resin consisting of 100 parts PVC, 25 parts dioctylphthlate and 0.3 parts zinc stearate was prepared. To this was added one part stabilizer (ground to less than 5 microns) and the stabilized resin fused on a two-roll mill at 177°C (350°F). A constant shear was applied and samples were taken every five minutes or until decomposition was evident. A control consisting of only the base resin lasted about seven minutes. A

standard organo-tin stabilizer (TM181) tripled the stability. In other examples, inorganic compositions corresponding to the invention matched or improved the stability over that of the standard. In one example, the stability was twice that of the standard. Thus, the inorganic compositions provide heat stability for PVC.

TABLE 2 HEAT STABILIZERS FOR PVC

| Stabilizer[1] | Color after 15 minutes | Minutes to Decomposition |
|---|---|---|
| None | - - | 7 |
| TM181[2] | good | 21 |
| $MgAl_2(OH)_8$ | good | 21 |
| $MgAl(OH)_{4.5}Cl_{0.5}$ | good | >28 |
| $MgAl(OH)_{4.75}(HCO_3)_{0.25}$ | good | 23 |
| $MgAl(OH)_{4.30}(CO_3)_{0.35}$ | poor | >43 |
| $LiAl_2(OH)_7$ | poor | >35 |

[1] 100 parts Geon 103 EP (B. F. Goodrich), 1 part stabilizer

[2] Standard

Example 3 - Polyvinylidene Chloride

This test involved extruding a polyvinylidene chloride resin under conditions where degradation is severe. Extrudate was submerged in ice water to quench the degradation reaction and prevent loss of monomer generated by decomposition. Subsequently the resulting extrudate was analyzed using head space G.C. analysis to determine the amount of generated monomer. The following table indicates that inorganic compositions (less than 60 microns-no grinding) corresponding to the invention stabilize polyvinylidene chloride relative to resin containing no stabilizers.

TABLE 3 HEAT STABILIZERS FOR POLYVINYLDENE DICHLORIDE RESIN[1]

| Stabilizer[2] | | PPM VDC Generated |
|---|---|---|
| None | | 14 |
| $MgAl_{1.33}(OH)_{5.6}Cl_{0.4}$ | heated to 150°C | 1.1 |
| $MgAl_2(OH)_{7.6}Cl_{0.4}$ | heated to 150°C | 7.2 |
| $MgAl_2(OH)_{7.6}Cl_{0.4}$ | heated to 300°C | 3.7 |
| $MgAl_2(OH)_{7.6}Cl_{0.4}$ | heated to 400°C | 1.3 |

[1] Base resin formulation = 1% Epoxol 9-5
.45% Citroflex
250 ppm Ionol

Extruder conditions = 190°C die temp.
115-125 sec. residence time

[2] Two parts per 100 parts resin

Example 4 - Polystyrene Foam

Three inorganic compositions were tested as acid scavengers in polystyrene foam containing a brominated flame retardant. Of particular concern in production of such foams is a decrease in the molecular weight ($M_2$) of the polystyrene and the "Limiting Oxygen Index" during processing to a foam. A currently used magnesium oxide was tested for comparison. Each formulation was extruded as a foam using a similar solids formulation and blowing agent system. The formulations and test results are shown in the following Tables 4-6. All three inorganic compositions (no grinding, but <60 microns) corresponding to the invention were found to be as good as or better than magnesium oxide as acid scavengers.

TABLE 4 INORGANIC COMPOSITIONS

| Powder | Initial Composition | Heat Treatment |
|---|---|---|
| A | $MgAl_2(OH)_{7.6}Cl_{0.4}$ | 150°C for 12 hours |
| B | $MgAl_2(OH)_{7.6}Cl_{0.4}$ | 150°C for 12 hours then 300°C for 10 hours |
| C | $MgAl_2(OH)_{7.6}Cl_{0.4}$ | 150°C for 12 hours then 600°C for 8 hours |

TABLE 5

| Formulation No. | 1 | 2 | 3 | 4 |
|---|---|---|---|---|
| Material (pph polystyrene) | | | | |
| Polystyrene, general purpose | 100 | 100 | 100 | 100 |
| Barium stearate | 0.10 | 0.10 | 0.10 | 0.10 |
| Indigo blue pigment 10% in polystyrene | 0.25 | 0.20 | 0.25 | 0.25 |
| Flame retardant* | 1.00 | 1.00 | 1.00 | 1.00 |
| Talc as nucleator | 0.40 | 0.30 | 0.40 | 0.40 |
| Ma #3331, MgO | 0.050 | | | |
| Powder A | | 0.050 | | |
| Powder B | | | 0.050 | |
| Powder C | | | | 0.050 |
| Blowing agent (50:50 methylene chloride:R-12 | 12.0 | 12.0 | 9.6 | 12.6 |

*flame retardant - FR-651P, monochloropentabromocyclohexane

TABLE 6 COMPARISON OF CHARACTERISTICS

| Formulation No. | Molecular Wt. | % Bromine | L.O.I.[1] % $O_2$ |
|---|---|---|---|
| 1 | 190,000 | 0.58 | 30 |
| 2 | 189,000 | 0.55 | 30 |
| 3 | 188,000 | 0.55 | 30 |
| 4 | 199,000 | 0.57 | 30 |
| Virgin polymer | 205,000 | 0 | N.D.[2] |

[1] Limiting Oxygen Index (ASTM D-2863)

[2] N.D. = not determined

WE CLAIM:

1. In the processing of polymeric materials containing halogen and/or acid components and/or which incorporate additives containing halogen and/or acid components the improvement which comprises adding to the polymeric material during processing a sufficient amount of a composition having elements and groups and a ratio of the elements and groups contained therein represented by the general formula

$$A_w^a B_x^b (OH)_y C_z^c$$

A and B are each one or more metals having valences of a and b respectively; a has a value of 1 or 2; b has a value of 2 or 3, w, x and y are positive numbers or fractions in which y is >2, and the ratio of x/w ≥1; z=0 to $\frac{(aw+bx)-y}{c}$; C is one or more anions having a valence of c; and c has a value of 1, 2, or 3; such that any hydrogen halides or other acids produced during said processing are effectively neutralized.

2. The composition of Claim 1 wherein in the general formula for the scavenger C is, for example, $CO_3^=$, $HCO_3^-$, $PO_4^{-3}$, $HPO_4^=$, $H_2PO_4^-$, $SO_4^=$, $HSO_4^-$, $S^=$, $HS^-$, $SO_3^{-2}$, $S_2O_5^{-2}$, $S_2O_4^{-2}$, $S_2O_2^{-2}$, $S_2^{-2}$, $CN^-$, $C_2^{-2}$, $I_3^-$, $HPO_3^{-2}$, $H_2P_2O_5^{2-}$,

$NH^{2-}$, $NH_2^-$, $NHOH^-$, $N_2H_3^-$, $NO_2^-$, $ClO_2^-$, $ClO^-$, $O^{-2}$, $F^-$, $Cl^-$, $Br^-$, $I^-$, $RCO_2^-$, $R(COO)_2^{-2}$, wherein R is alkyl or aryl.

3. The process of Claim 1 wherein said scavenger is injected into the reaction mixture at a point at the end or just after the reactor system.

4. The process of Claim 1 wherein in the formula A is magnesium and B is aluminum.

5. The process of of Claim 4 wherein the composition is coated with a surface agent.

6. The process of Claim 1 wherein the amount of the composition is less than 0.5 part by weight per 100 parts by weight of resin.

7. The process of Claim 1 wherein the composition has an average secondary particle size of not more than 5 microns.

8. The process of Claim 1 wherein additives containing halogen components include brominated flame retardants.

9. The process of Claim 1 wherein polymers containing thermally releasable halogen include polyvinyl chloride, polyvinylidene dichloride, and chlorinated polyethylene.

10. The process of of Claim 4 wherein in the formula the ratio x/w is >1.